# EUROPEAN PATENT SPECIFICATION

(11) **EP 2 596 595 B1**
(45) Date of publication and mention of the grant of the patent: **10.09.2014**
(21) Application number: 11730326.3
(22) Date of filing: 11.07.2011
(51) Int. Cl.: H04L 9/32

(54) **METHOD AND SYSTEM FOR SECURE ELECTRONIC SIGNING**
VERFAHREN UND SYSTEM FÜR SICHERE ELEKTRONISCHE SIGNATUREN
PROCÉDÉ ET SYSTÈME POUR SIGNATURE ÉLECTRONIQUE SÉCURISÉE

(30) Priority: 20.07.2010 ES 201031116
(43) Date of publication of application: 29.05.2013
(73) Proprietor: Telefónica, S.A., 28013 Madrid (ES)
(72) Inventor: AMAYA CALVO, Antonio Manuel, E-28013 Madrid (ES); OCHOA FUENTES, Miguel, E-28013 Madrid (ES)
(74) Representative: Carpintero Lopez, Francisco
(86) International application number: PCT/EP2011/061717
(87) International publication number: WO 2012/010450

(56) References cited:
- EP-A1- 1 261 165
- EP-A1- 1 401 143
- WO-A1-00/39958
- US-A1- 2003 093 678
- US-A1- 2009 110 199

## Description

### TECHNICAL FIELD

The present invention relates to security in electronic documents. More particularly, the present invention relates to secure electronic signing of documents.

### DESCRIPTION OF THE PRIOR ART

Electronic documents are being used on all kind of business now, complementing or replacing paper documents. When those documents are used for any kind of legal transaction they usually require a signature, the same way that paper documents have to be signed.

Handwritten signature implies the signer's intent but isn't linked to a particular document. It's perfectly possible to 'lift' a handwritten signature from a paper document, paste it into another and, barring proving the counterfeit of the signature, the new document would be considered signed. Digital signatures, however, are unique for each signer and document, so signatures are linked to a particular document. If anything changes in the document then the signature would not be valid.

Digital signatures are composed using encryption algorithms. We can model a simple digital scheme as follows:
1. Signers have two keys, a Verification (or public) Key (PbK) and a Signature (or private) Key (PvK). PbK is publicly known, and it is computationally unfeasible to get PvK from PbK. Only the signer knows and has access to PvK.
2. There exists a pair of functions S(k,x) (signature function) and V(k,x) (verification function) with the following property:
   - V(PbK, S(PvK, x)) = x
3. There exists a function H(x) (hash function) with the following properties:
   - The output for H(x), being x a stream of bits of any length, is a fixed length strength of bytes.
   - Given x it is computationally efficient to compute H(x)
   - Given any value h which is a valid output from H(), it is computationally unfeasible to compute any value x such that *H(x)=h.*

So given the schema (Pvk, PbK, S(), V(), H()), the algorithm to compute a digital signature of a document D is as follows:
1. Compute *h = H*(*D*)*.*
2. Compute s = S(PvK, h)

While the algorithm to verify a digital signature for a document D is as follows:
1. Compute h = H(d)
2. Verify that V(PbK, s) = h

With the scheme as defined, digital signatures are linked to a document and do not only imply signer's consent to the contents but also prevent any tampering with the document.

Note that for this scheme to work, there must be some way of distributing, verifying and linking PbK to the signer.

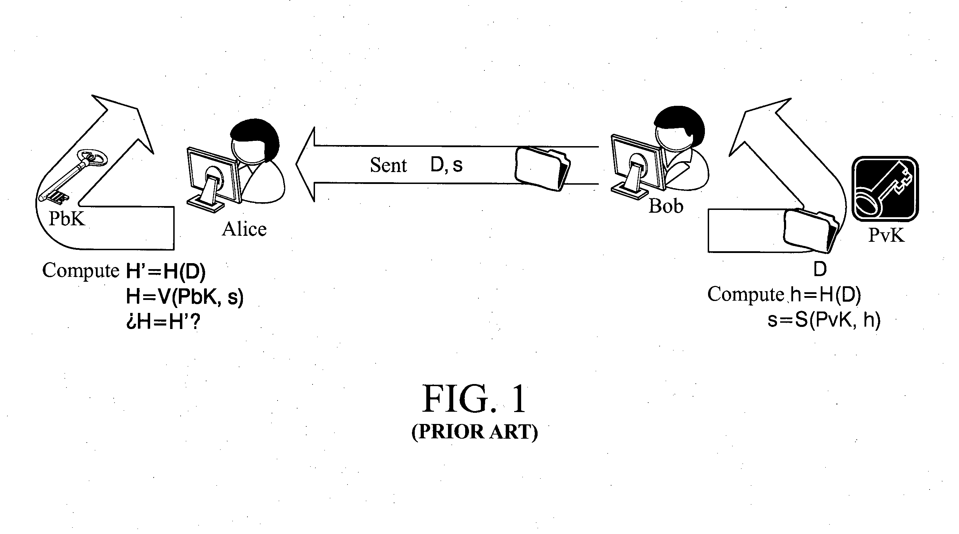

Schematically, the conventional signature process is represented in Figure 1. On Figure 1, Bob is the signer of the document and Alice the recipient/verifier of the signed document.

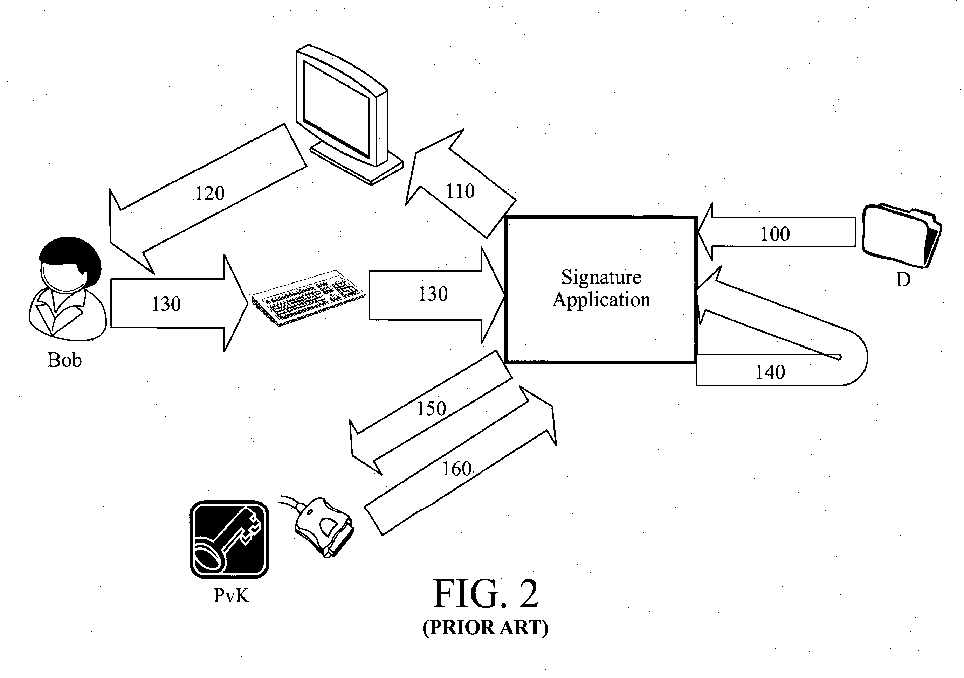

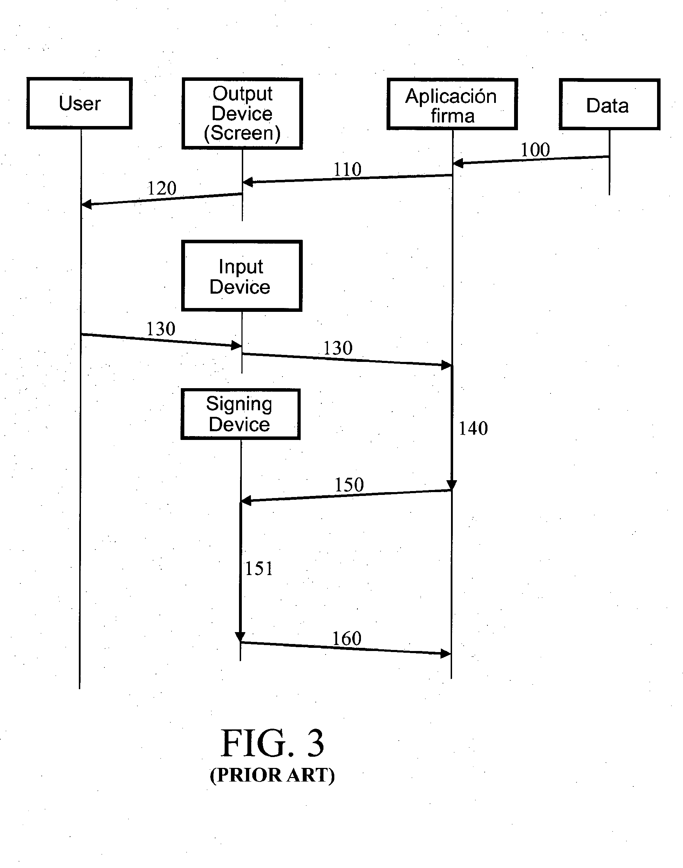

A schema detailing the signature process, in which the private key PvK is stored on secure hardware, as implemented usually, is graphically represented in Figure 2. Figure 3 represents the same process on a timeline schema, for clarity. The following table summarizes the illustrated process:

| | |
|---|---|
| **100** | A Signature Application (SA) reads the document to be signed (D) from the storage (local or networked) |
| **110** | The application presents a graphical representation of D to Bob, so he can review it before signing. This part of the process is required by most digital signature legislation. |
| **120** | Bob reads (and understands) the representation of D. |
| **130** | Bob affirms his intention of signing the document. It is possible that in this step a PIN (Personal Identification Number) is required. This PIN will be used to 'unlock' PvK. |
| **140** | SA computes H(D). |
| **150** | SA sends H(D) to the signing device, with the user's PIN if it is required. |
| **160** | The signing device, using the securely stored private key, computes and returns S(PvK,H(D)) |

| | |
|---|---|
| Note that the presented schema is valid for any triad of functions (S(),V(), H()). | |

Digital Signature Standard (DSS) presents a signature schema that, while specifying the concrete hash and encryption functions, follows the general schema just described. This scheme is described with complete detail on the Digital Signature Standard (DSS)
(http://www.itl.nist.gov/fipspubs/fip186.htm).

PKCS#7 (RFC-2315 http://tools.ietf.org/html/rfc2315) defines a Message Format for signed data. PKCS stands for Public Key Cryptographic Standards.

XML-DSig (http://www.w3.org/TR/xmldsig-core/) is a W3C (World Wide Web Consortium) recommendation that defines XML (Extensible Markup Language) syntax for digital signatures. Functionally, it has much in common with PKCS#7 but is more extensible and geared towards signing XML documents.

European patent application "Method and system for implementing a digital signature" (EP1142194 A1) describes a method to realize digital signatures on a mobile station, but there's nothing stated on it about the non-repudiation problem.

Patent application 'Electronic document processing system and method of forming digital signature' (US 5465299 A) describes a method to create 'versions' of a digitally signed document, in which each successive version is signed and includes the signature of the previous version.

Patent 'Method and apparatus for an adapted digital signature' (US 6615348 B1) describes an algorithm to generate user identities using a modified digital signature algorithm.

Patent 'Method and apparatus for validating a digital signature' (US 7178029 B2) describes a way to verify that a signature that includes a digital certificate is valid even if the digital certificate has been revoked. It's basically a timestamp service.

European patent application "Signaturverfahren" (EP 1261165 A1) describes a method of generating a signature on a mobile device and transferring it to a personal computer.

Patent application "Server-side digital signature system" (US 2003/0093678) describes a browser-based remote signature generation service.

European patent application "Methods and system for providing a public key fingerprint list in a PK system" (EP 1401143 A1) describes a server storing a list of public key fingerprints.

Patent application "Toolbar signature" (US 2009/0110199) describes a web browser toolbar for generating signatures.

However, current solutions present several problems: According to Ross Anderson, Professor of Security Engineering at the University of Cambridge: '*I just don't know how to be confident of a digital signature I make even on my own PC* -- *and I've worked in security for over fifteen years. Checking all the software in the critical path between the display and the signature software is way beyond my patience."* And: '*However, if I were foolish enough to ever accept an advanced electronic signature device, then there would be a presumption of the validity of any signature that appeared to have been made with it. [...] This, coupled with the facts that smartcards don't have a trusted user interface and that the PCs which most people would use to provide this interface are easily and frequently subverted, made electronic signatures instantly unattractive.*'

That is so because, on the scheme presented in Figure 2, some other software running on the user's computer could intercept and change data on steps 100, 120, 140, 150 and 160. And on step 130 it could capture the user's PIN and use it to silently sign more documents (automatically doing all the process except steps 110, 120 and 130).

In other words, current systems and system definitions enforce severe restrictions on the way that 'Signature Application' (see Figure 2) is built. For example, applications built for the Spanish DNIe (electronic identity document) have to comply with Common Criteria EAL3 (Methodically Tested and checked). So it could be thought that any application that is certified is secure.

But on the same certification document it is specifically stated that for the whole signature schema to be secure the user's device (computer) has to be secure. And with current technology it is virtually impossible to attest that any computer does not have malware installed and running. Never mind doing so after some time has passed. Any statement about the security of a user's computer when a signature was done (possibly several months or even years before) is just a wild guess.

Thus, the problem is that, while digital signatures are mathematically sound and computationally easy, they are too complex to do or verify by hand, so the users do not have any trusted way to check what they are signing. This means that, effectively, users do not have real control over what they sign.

The inventors have not found any existing patent document that tries to solve this problem.

### SUMMARY OF THE INVENTION

The present invention solves the above-mentioned problems by doing the critical computation (hash of the to-be-signed document) remotely, on a trusted location.

This disclosure refers to a method and system which, based on the development of specific hardware and software residing on a trusted server, assure the validity of digital signatures realized with it. The method and system avoid or make evident any tampering on the normal digital signature process.

In a first aspect, a method for secure electronically signing a document is presented. The method comprises: reading a document to be signed by an application; presenting a graphical representation of said document to a user; accepting the document to be signed by said user. The method also comprises: at a server, computing a hash function, an extended validation function for the hash and a readable summary function of the to-be-signed document; from said server, sending said hash function and said extended validation function for the hash to said application and to a signing device; from said server, sending said hash function and said readable summary function of the to-be-signed document to a secondary device.

Preferably, the method also comprises: verifying by the user that said readable summary function of the to-be-signed document received in the secondary device corresponds to said document; verifying by the user that said hash function received in the secondary device is the same as the one the signing device is presenting to the user for his review; if the data verification is correct, accepting it by the user. Preferably, the step of accepting by the user is done by introducing the user's PIN in the signing device.

Preferably, the method also comprises: computing by said signing device a signature function; sending said signature function by said signing device to said application. In a particular embodiment, the signature function is dependent on a securely stored private key, on said hash function and on said extended validation function for the hash.

In a particular embodiment, the secondary device is a mobile terminal.

In a particular embodiment, the step of accepting the document to be signed by said user is done without requiring the user's PIN.

Once the user has accepted the document to be signed, the application preferably sends to the server some information about said document and about the signing device and the secondary device. Preferably, said information about the signing device and the secondary device is the address of the signing device and the address of the secondary device.

In another aspect, a system comprising means adapted to perform the above-described method is presented.

Finally, a computer program comprising computer program code means adapted to perform the above-described method is presented.

### BRIEF DESCRIPTION OF THE DRAWINGS

To complete the description and in order to provide for a better understanding of the invention, a set of drawings and a table are provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 schematically represents a conventional signature process.
Figure 2 represents a schema detailing the conventional signature process, in which the private key PvK is stored on secure hardware, as implemented usually.
Figure 3 represents the same process on a timeline schema, for clarity.
Figure 4 shows a general scheme of the method and system according to an embodiment of the invention.
Figure 5 Shows a detailed scheme of the method according to an embodiment of the invention.
Figure 6 shows a timeline of the guaranteed signature process according to an embodiment of the invention.

Corresponding numerals and symbols in the different figures refer to corresponding parts unless otherwise indicated.

### DESCRIPTION OF PREFERRED EMBODIMENTS

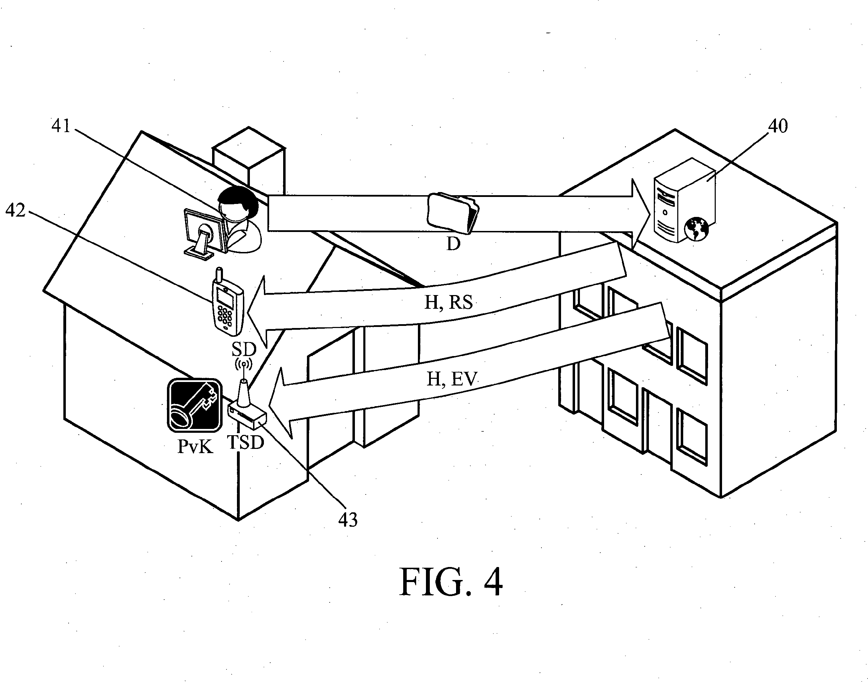

Figure 4 shows a system according to an embodiment of the invention. The system comprises: a signing device 43, which in the context of this disclosure is also called trusted signing device (TSD); and a server 40, which in the context of this disclosure is also called trusted server (TS). The system also requires a client signature application (CSA), which is, with respect to the one described in the prior art, a modified client signature application.

The signing device (TSD) 43 has a trusted user interface (incorporated into the device 43). This interface includes, at least, a screen and a numeric keyboard. Preferably, the signing device 43 has also wireless capabilities. Besides, it is configured to only process signature requests that include a correct extended validation (trusted signature) for the to-be-signed hash. The signing device (TSD) 43 has a standard ISO 7816 smartcard interface. The actual key storage can be on an external, pre-existing smartcard (for example, but not limited to, the Spanish DNIe).

The server (TS) 40 is configured to:
- receive to-be-signed documents D from the users;
   - compute a hash function H(D) for the to-be-signed documents;
   - compute an extended validation function for the hash EV(H(D));
   - compute a readable summary function of document D, RS(D), which is a representation on plain text of the content included in D that will allow a potential signer to recognize D;
      - send EV(H(D)) and H(D) to the signing device (TSD) 43; and
   - send RS(D) to a secondary device (SD) 42 of the user 41. This secondary device 42 is preferably a mobile terminal 42.

The client signature application (CSA), also called modified client signature application, is configured to present D to the user and to send D to the server 40 (also called trusted server TS) to start the signature process, with the connection data for the signing device (TSD) 43 and the secondary device (SD) 42.

Figure 4 shows a simplified schema of the method and signature process of the invention.

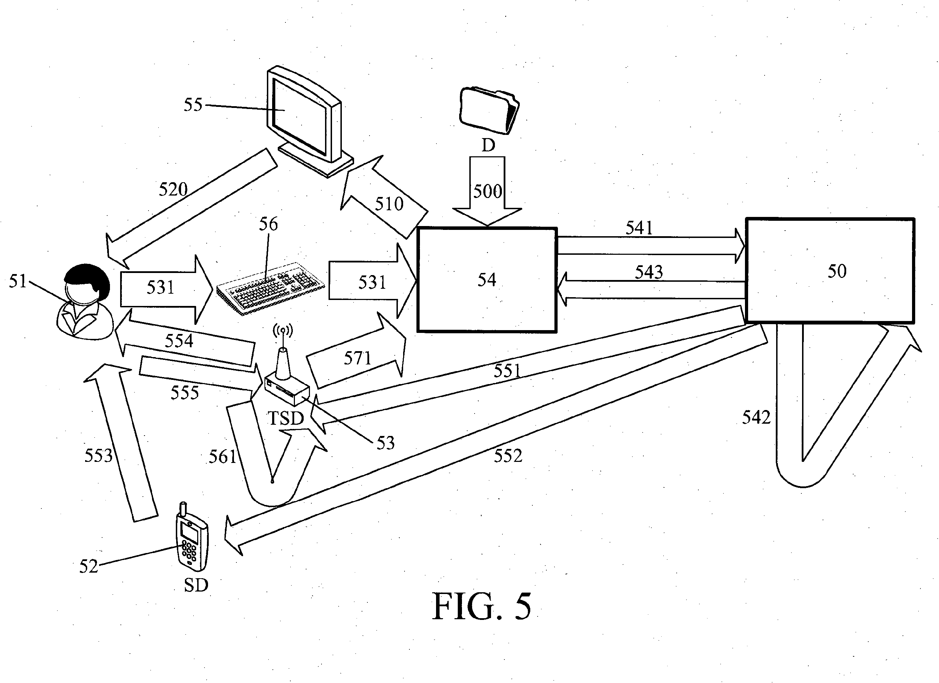

A detailed scheme of the method according to an embodiment of the invention is shown in figure 5.

In figure 5, a system comprising the following elements is shown: a client signature application (CSA) 54, a user or signer 51, a graphical user interface 55, a server or trusted server (TS) 50, a trusted signing device (TSD) or simply signing device 53 and a secondary device (SD) 52. The method of secure signing a document D is as follows:
In a first step 500, a signature application or client signature application (CSA) 54 reads the document to be signed D from a storage, which can be either local or networked (remote). This step 500 is similar to the conventional method.

Next, the signature application (CSA) 54 presents 510 through an output device or graphical user interface 55 (for example, a screen) a graphical representation of D to the signer (user 51), so he can review it before signing. This part of the process is currently required by most digital signature legislations.

Afterwards, the signer 51 reads (and understands) 520 the representation of D. This step is neither different from conventional methods.

Next, the signer 51 affirms 531 his intention of signing the document. This is done through an input device 56 which can be, for example, a keyboard. In this step 531 he is not required to introduce his PIN (Personal Identification Number). This is different from most conventional signatures processes.

The following steps are also different from conventional signature processes:
Then 541, the client signature application (CSA) 54 sends D and the addresses of the secondary device (SD) 52 and the signing device (TSD) 53 to the server (TS) 50.

Next 542, the server (TS) 50 computes H(D), EV(H(D)) and RS(D) (the readable summary of D).

Afterwards 543, the server (TS) 50 sends H(D) and EV(H(D)) to the client signature application (CSA) 54.

Then 551, the server (TS) 50 sends H(D) and EV(H(D)) to the signing device (TSD) 53. The signing device (TSD) 53 verifies EV(H(D)) and, if it is correct, it presents this information - H(D) and EV(H(D)) - on its included interface (such as screen).

Next 552, the server (TS) 50 sends H(D) RS(D) to the secondary device (SD) 52. In a preferred embodiment, this secondary device (SD) 52 is a mobile phone, in which case the data are sent by SMS or MMS.

Afterwards 553, the signer 51 verifies that RS(D) received in the secondary device (SD) 52 corresponds to the document (D) that he wanted to sign.

Then 554, the signer 51 verifies that H(D) received in the secondary device (SD) 52 is the same as the one the signing device (TSD) 53 is presenting for his review on its included screen.

Next 555, if the data verification is correct, the signer 51 introduces his PIN on the signing device's (TSD) 53 keyboard.

Then 561, the signing device 53, using the securely stored private key and the user's provided PIN (Personal Identification Number), computes a signature function S from PvK and EV(H(D)), *S*(*PvK, EV*(*H*(*D*))).

Finally 571, the signing device sends *S*(*PvK, EV*(*H*(*D*))) to the client signature application (CSA) 54. The extended validation function (EV) is included in the signature to attest that the signature was realized used the system described in this document, and to avoid the possibility of repudiation of the signature.

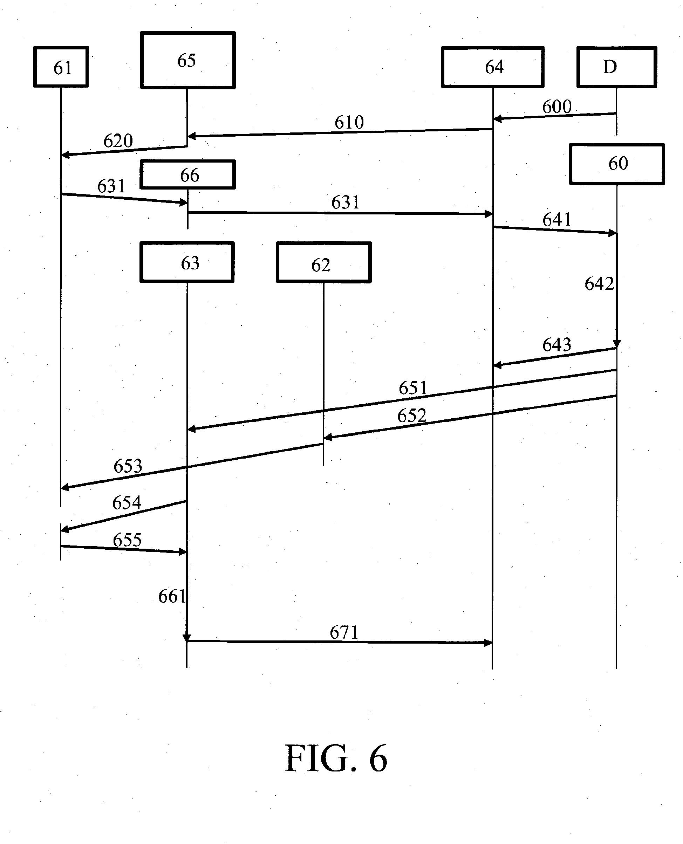

The corresponding timeline of the inventive signature process is described in figure 6, wherein corresponding reference signs have been used (610 instead of 510 and so on).

As described, one of the main advantages of this invention is that it prevents the tampering with the signature data, or makes this tampering evident to the signer, thus avoiding possible repudiation problems.

With current solutions the signer of any digitally signed document can contest (repudiate) any signature done with his private key on the basis that it is impossible to him (even according to experts on the field, like the aforementioned Ross Anderson) to know exactly what he is signing. The signer could repudiate the signature by saying that:
- The document he was shown is not the document that has the signature. It could be done by an application on his own PC.
- Some application could have stolen his PIN and used it to sign any number of documents without him being informed.

Since digital signatures are being used on more applications every day (and on the EU will be mandatory for relationships with the government soon), it is mandatory to find a solution to this problem. The invention presented on this document is such a solution.

## Claims

1. A method for secure electronically signing a document (D), which comprises:
- reading (500, 600) a document to be signed (D) by an application (54, 64);
- presenting (510, 610) a graphical representation of said document (D) to a user (51, 61);
- accepting (531, 631) the document to be signed (D) by said user (51, 61);
the method being **characterised by**:
- at a server (50, 60), computing (542, 642) a hash function (H(D)), an extended validation function for the hash (EV(H(D))) and a readable summary function of the to-be-signed document (RS(D));
- from said server (50, 60), sending (543, 643; 551, 651;) said hash function (H(D)) and said extended validation function for the hash (EV(H(D))) to said application (54, 64) and to a signing device (53, 63);
- from said server (50, 60), sending (552, 652) said hash function (H(D)) and said readable summary function of the to-be-signed document (RS(D)) to a secondary device (52, 62).

2. The method of claim 1, further comprising:
- verifying (553, 653) by the user (51, 61) that said readable summary function of the to-be-signed document (RS(D)) received in the secondary device (52, 62) corresponds to said document (D);
- verifying (554, 654) by the user (51, 61) that said hash function (H(D)) received in the secondary device (52, 62) is the same as the one the signing device (53, 63) is presenting to the user (51, 61) for his review;
- if the data verification is correct, accepting (555, 655) it by the user (51, 61).

3. The method of claim 2, wherein said accepting (555, 655) is done by introducing the user's PIN in the signing device (53, 63).

4. The method of either claim 2 or 3, further comprising:
- computing (561, 661) by said signing device (53, 63) a signature function;
- sending (571, 671) said signature function by said signing device (53, 63) to said application (54, 64).

5. The method of claim 4, wherein said signature function is dependent on a securely stored private key, on said hash function (H(D)) and on said extended validation function for the hash (EV(H(D))).

6. The method of any preceding claim, wherein said secondary device (52, 62) is a mobile terminal.

7. The method of any preceding claim, wherein said step of accepting (531, 631) the document to be signed (D) by said user (51, 61) is done without requiring the user's PIN.

8. The method of any claim 2-7, wherein, once the user (51, 61) has accepted (531, 631) the document to be signed (D), said application sends (541, 641) to said server (50, 60) some information about said document (D) and about the signing device (53, 63) and the secondary device (52, 62).

9. The method of claim 8, wherein said information about the signing device (53, 63) and the secondary device (52, 62) is the address of the signing device (53, 63) and the address of the secondary device (52, 62).

10. A system comprising means adapted to perform the method according to any preceding claim.

11. A computer program comprising computer program code means adapted to perform the method according to any claims from 1 to 9 when said program is run on a computer, a digital signal processor, a field-programmable gate array, an application-specific integrated circuit, a micro-processor, a micro-controller, or any other form of programmable hardware.

## Patentansprüche

1. Verfahren zum sicheren elektronischen Unterschreiben eines Dokumentes (D), welches aufweist:
- Lesen (500, 600) eines zu unterschreibenden Dokumentes (D) durch eine Anwendung (54, 64);
- Präsentieren (510, 610) einer graphischen Repräsentation des Dokumentes (D) an einen Benutzer (51, 61);
- Akzeptieren (531, 631) des zu unterschreibenden Dokumentes (D) durch den Benutzer (51, 61);
wobei das Verfahren **gekennzeichnet ist durch**:
- Berechnen (542, 642) einer Hashfunktion (H(D)), eine erweiterte Validierungsfunktion für den Hashwert (EV(H(D))) und eine lesbare Zusammenfassungsfunktion des zu unterscheidenden Dokumentes (RS(D)) an einem Server (50, 60);
- Senden (543, 653; 551, 651) der Hashfunktion (H(D)) und der erweiterten Validierungsfunktion für den Hashwert (EV(H(D))) zu der Anwendung (54, 56) und zu einer Signaturgerät (53, 63) von dem Server (50, 60);
- Senden (552, 652) der Hashfunktion (H(D)) und der lesbaren Zusammenfassungsfunktion des zu unterschreibenden Dokumentes (RS(D)) an ein sekundäres Gerät (52, 62) von dem Server (50, 60).

2. Verfahren nach Anspruch 1, des Weiteren aufweisend:
- Verifizieren (553, 653) durch den Benutzer (51, 61), dass die lesbare Zusammenfassungsfunktion des zu unterschreibenden Dokumentes (RS(D)), welche in dem sekundären Gerät (52, 62) empfangen wurde, mit dem Dokument (D) korrespondiert;
- Verifizieren (554, 654) durch den Benutzer (51, 61), dass die Hashfunktion (H(D)), welche in dem sekundären Gerät (52, 62) empfangen wurde, dieselbe ist wie die, welche das Signaturgerät (53, 63) dem Benutzer (51, 61) für seine Überprüfung präsentiert;
- wenn die Datenverifikation korrekt ist, diese durch den Benutzer (51, 61) akzeptieren (555, 655).

3. Verfahren nach Anspruch 2,
wobei das Akzeptieren (555, 655) durch Eingeben der Benutzer-PINs in das Signaturgerät (53, 63) durchgeführt wird.

4. Verfahren nach Anspruch 2 oder 3, des Weiteren aufweisend:
- Berechnen (561, 661) einer Signaturfunktion durch das Signaturgerät (53, 63);
- Senden (571, 671) der Signaturfunktion des Signaturgerät (53, 63) zu der Anwendung (54, 64).

5. Verfahren nach Anspruch 4,
wobei die Signaturfunktion abhängig ist von einem sicher gespeicherten privaten Schlüssel, von der Hashfunktion (H(D)) und von der erweiterten Validierungsfunktion des Hashwertes (EV(H(D))).

6. Verfahren nach einem der vorgehenden Ansprüche,
wobei das sekundäre Gerät (52, 62) ein mobiles Endgerät ist.

7. Verfahren nach einem der vorangehenden Ansprüche,
wobei der Schritt des Akzeptierens (531, 631) des zu unterschreibenden Dokumentes (D) durch den Benutzer (51, 61) durchgeführt wird, ohne dass die PIN des Benutzers benötigt wird.

8. Verfahren nach einem der Ansprüche 2-7,
wobei sobald der Benutzer (51, 61) das zu unterschreibende Dokument (D) akzeptiert (531, 631) hat die Applikation einige Informationen über das Dokument (D) und über das Signaturgerät (53, 63) und das sekundäre Gerät (52, 62) an den Server (50, 60) sendet.

9. Verfahren nach Anspruch 8,
wobei die Information über das Signaturgerät (53, 63) und das sekundäre Gerät (52, 62) die Adresse des Signaturgerät (53, 63) und die Adresse des sekundären Geräten (52, 62) ist.

10. System aufweisend Mittel, welche zum Ausführen der Methode nach einem der vorhergehenden Ansprüche ausgelegt sind.

11. Computerprogramm aufweisend Computerprogrammcodemittel, welche ausgestaltet sind, das Verfahren nach einem der Ansprüche 1 bis 9 auszuführen, wenn das Programm auf einem Computer, einem digitalen Signalprozessor, einem Field-Programmable Gate Array (FPGA), einer anwendungsspezifischen integrierten Schaltung (ASIC), einem Mikroprozessor, einem Mikrokontroller oder jegliche andere Form von programmierbarer Hardware läuft.

## Revendications

1. Procédé permettant de sécuriser la signature électronique d'un document (D) comprenant les étapes consistant à :
- faire lire (500, 600) un document (D) à signer par une application (54, 64),
- présenter (510, 610) une représentation graphique de ce document (D) à un utilisateur (51, 61),
- faire accepter (531, 631) le document (D) devant être signé par l'utilisateur (51, 61),
**caractérisé en ce qu'**il comprend les étapes consistant à :
- au niveau d'un serveur (50, 60) calculer (542, 642) une fonction de contrôle (H(D)), une fonction de validation élargie du contrôle (EV(H(D))) et une fonction de résumé lisible du document à signer (RS(D)),
- à partir du serveur (50, 60) transmettre (543, 643, 551, 651) la fonction de contrôle (H(D)) et la fonction de validation élargie du contrôle (EV(H(D))) à l'application (54, 64) et à un dispositif de signature (53, 63),
- à partir du serveur (50, 60) transmettre (552, 652) la fonction de contrôle (H(D)) et la fonction de résumé lisible du document à signer (RS(D)) à un dispositif secondaire (52, 62).

2. Procédé conforme à la revendication 1,
comprenant en outre les étapes consistant à :
- faire vérifier (553, 653) par l'utilisateur (51, 61) que la fonction de résumé lisible du document à signer (RS(D)) reçue dans le dispositif secondaire (52, 62) correspond au document (D) ;
- faire vérifier (554, 654) par l'utilisateur (51, 61) que la fonction de contrôle (H(D)) reçue dans le dispositif secondaire (52, 62) est la même que celle que le dispositif de signature (53, 63) a présentée à l'utilisateur (51, 61) pour permettre sa révision,
- si la vérification des données est correcte, les faire accepter (555, 655) par l'utilisateur (51, 61).

3. Procédé conforme à la revendication 2,
selon lequel
l'acceptation (555, 655) est effectuée en utilisant le code PIN de l'utilisateur dans le dispositif de signature (53, 63).

4. Procédé conforme à l'une des revendications 2 et 3,
comprenant en outre les étapes consistant à :
- faire calculer (561, 661) par le dispositif de signature (53, 63) une fonction de signature,
- faire transmettre (571, 671) cette fonction de signature par le dispositif de signature (53, 63) à l'application (54, 64).

5. Procédé conforme à la revendication 4,
selon lequel la fonction de signature dépend d'une clef privée enregistrée de façon sécurisée, de la fonction de contrôle (H(D)) et de la fonction de validation élargie du contrôle (EV(H(D))).

6. Procédé conforme à l'une quelconque des revendications précédentes,
selon lequel le dispositif secondaire (52, 62) est un terminal mobile.

7. Procédé conforme à l'une quelconque des revendications précédentes,
selon lequel l'étape consistant à accepter (531, 631) le document (D) à signer par l'utilisateur (51, 61) est mise en oeuvre sans nécessiter le code PIN de l'utilisateur.

8. Procédé conforme à l'une quelconque des revendications 2 à 7, selon lequel lorsque l'utilisateur (51, 61) a accepté (531, 631) le document (D) à signer, l'application transmet (541, 641) au serveur (50, 60) certaines informations concernant le document (D), le dispositif de signature (53, 63) et le dispositif secondaire (52, 62).

9. Procédé conforme à la revendication 8,
selon lequel les informations concernant le dispositif de signature (53, 63) et le dispositif secondaire (52, 62) sont l'adresse du dispositif de signature (53, 63) et l'adresse du dispositif secondaire (52, 62).

10. Système comprenant des moyens aptes à permettre la mise en oeuvre du procédé conforme à l'une quelconque des revendications précédentes.

11. Programme d'ordinateur comprenant des moyens de code de programme d'ordinateur aptes à permettre la mise en oeuvre du procédé conforme à l'une quelconque des revendications 1 à 9, lorsque ce programme est exécuté sur un ordinateur, un processeur de signal numérique, un réseau de portes programmables, un circuit intégré spécifique à l'application, un microprocesseur, un microcontrôleur ou tout autre forme de matériel informatique programmable.
